# EUROPEAN PATENT APPLICATION

(11) **EP 4 660 151 A1**
(43) Date of publication of application: **10.12.2025**
(21) Application number: 24749903.1
(22) Date of filing: 12.01.2024
(51) Int. Cl.: C02F 1/00

(54) **PROCESS CALCULATION METHOD FOR WATER TREATMENT PROCESS**

(30) Priority: 30.01.2023 JP 2023011784
(71) Applicant: Toray Industries, Inc., Tokyo 103-8666 (JP)
(72) Inventor: KISHIMOTO Jumpei, Iyo-gun, Ehime 791-3193 (JP); KAWASHIMA Yoshiyuki, Otsu-shi, Shiga 520-8558 (JP)
(74) Representative: Hoefer & Partner Patentanwälte mbB
(86) International application number: PCT/JP2024/000611
(87) International publication number: WO 2024/161948

(57) **Abstract**

Provided is a process calculation method for a water treatment process, the process calculation method comprising: step 1 for producing a water treatment process flow diagram simulating a real water treatment process flow on a screen; step 2 for provisionally determining a flow rate of each stream such that there is no inconsistency in water balance with respect to each unit icon on the water treatment process flow diagram; step 3 for changing any one of the flow rates of the streams determined in step 2 to an arbitrary value, and confirming the flow rate; step 4 for calculating all the flow rates of streams that are necessarily calculatable from the confirmed flow rate of the stream, and confirming the flow rates; step 5 for selecting one unit icon which is connected to one or more streams with confirmed flow rates and which is connected to one or more streams with unconfirmed flow rates, calculating the flow rates of all the streams with unconfirmed flow rates connected to the selected unit icon according to a priority order set for each unit icon, and confirming the flow rates; and step 6 for repeating steps 4 to 5 until the flow rates of all the streams are confirmed.

## Description

### TECHNICAL FIELD

The present invention relates to a process calculation method for a water treatment process for obtaining treated water by treating natural water such as river water, lake water, and seawater or sewage and industrial wastewater.

### BACKGROUND ART

The water treatment process includes water treatment devices for sedimentation separation, flotation separation, centrifugation, coagulation treatment, stirring treatment, aerobic treatment, anaerobic treatment, filtration, squeezing, filter cloth, microfiltration membrane, ultrafiltration membrane, nanofiltration membrane, reverse osmosis membrane, accelerated oxidation, ion exchange, adsorption, absorption, deaeration, crystallization, distillation, heat exchange, mineral addition, and the like, and these water treatment devices are selected or used in combination according to raw water properties and product water applications.

Among these, in recent years, a membrane separation method has characteristics such as energy saving, space saving, and improvement in treated water quality, and thus has been expanded in various fields. For example, a microfiltration membrane or an ultrafiltration membrane may be applied to a water purification process for producing industrial water or tap water from river water, ground water, or sewage treated water, and a reverse osmosis membrane may be applied to seawater desalination. In addition, various water treatment processes have been devised and introduced in which, for example, the sedimentation separation, the flotation separation, the centrifugation, and the coagulation treatment are combined as pretreatments of the separation membranes to stabilize the operability of the separation membranes, or the ion exchange is combined with post-treatment of the separation membranes to produce pure water for use.

In these various water treatment processes, a treatment flow of the water treatment process using each water treatment device is predetermined, and the calculation of the water treatment process such as water balance calculation, heat balance calculation, and material balance calculation is generally executed by simulation software on a computer along the treatment flow. Patent Literature 1 describes a method for creating a treatment flow of a water treatment process by arranging water treatment devices or the like using coordinates on a flow screen. Patent Literature 2 also describes a method of arranging water treatment devices or the like on a treatment flow screen, wiring the water treatment devices or the like, and then performing calculation.

In designing a water treatment process flow, the optimization of overall process design is often examined while freely changing a flow rate of a specific stream to various values. However, in a water treatment process including a complicated flow of water, in particular, in a water treatment process including circulation, it is difficult to determine a flow rate without contradiction in a water balance in the entire process.

Therefore, in Patent Literature 2, a flow rate without contradiction in the water balance is determined by a repeated calculation in which water balances of respective units are calculated in order, and the calculation is performed again after returning to the first unit. However, in the method using a repeated calculation, there is a problem that a value changed to any value by the user is forcibly rewritten to another value in the repeated calculation process.

In addition, in reverse osmosis membrane treatment simulation software for seawater and brackish water desalination, in general, water treatment processes are limited to any of those assumed in advance, and furthermore, streams in which a user can change their flow rates are limited, thereby adopting a flow rate calculation method in which there is no contradiction in a water balance corresponding to only specific patterns. However, a water balance calculation method set for specific processes and specific streams has a problem that the user cannot design processes freely and a problem that only flow rates of streams assumed in advance can be freely changed.

### CITATION LIST

### PATENT LITERATURE

Patent Literature 1: JPH09-297782A
Patent Literature 2: JP61073303B

### SUMMARY OF INVENTION

### TECHNICAL PROBLEM

An object of the present invention is to provide a process calculation method for simulating a water treatment process on a computer, in which a water treatment process for obtaining treated water by treating natural water such as river water, lake water, and seawater or sewage and industrial wastewater, is simulated, and which allows a user to change a flow rate of any stream and to obtain a water balance with no contradiction throughout an entire process in a user-friendly manner.

### SOLUTION TO PROBLEM

In order to achieve the above object, the present invention provides a process calculation method for a water treatment process that operates on a computer and on a screen of the computer, the method including:
1. step 1 of creating a water treatment process flow diagram simulating a real water treatment process flow by arranging unit icons corresponding to water treatment unit processes on the screen and connecting streams each representing a flow of water to input terminals or output terminals of the respective unit icons;
2. step 2 of once setting flow rates of the respective streams on the water treatment process flow diagram so that there is no contradiction in a water balance for each of the unit icons;
3. step 3 of changing and determining any one of the flow rates of the streams set in step 2 to any value;
4. step 4 of calculating and determining flow rates of all the streams that are calculable necessarily based on the determined flow rates of the streams;
5. step 5 of selecting one unit icon connected to any one or more of the streams whose flow rates are determined and connected to any one or more of the streams whose flow rates are not determined, and calculating and determining the flow rates of all the streams which are connected to the selected unit icon and whose flow rates are not determined according to a priority order set for each of the unit icons; and
6. step 6 of repeating the steps 4 to 5 until the flow rates of all the streams are determined.

### ADVANTAGEOUS EFFECTS OF INVENTION

In the simulation of the water treatment process, the user can change a flow rate of any stream, there is no contradiction in the entire process, and it is possible to obtain a user-friendly water balance.

### BRIEF DESCRIPTION OF DRAWINGS

[FIG. 1] FIG. 1 is a flowchart illustrating an example of a water treatment process of the present invention.
[FIG. 2] FIG. 2 is a schematic diagram illustrating an embodiment of the present invention.
[FIG. 3] FIG. 3 is a schematic diagram illustrating an embodiment of the present invention.
[FIG. 4] FIG. 4 is a schematic diagram illustrating an embodiment of the present invention.
[FIG. 5] FIG. 5 is a schematic diagram illustrating an embodiment of the present invention.
[FIG. 6] FIG. 6 is a schematic diagram illustrating an embodiment of the present invention.
[FIG. 7] FIG. 7 is a schematic diagram illustrating an embodiment of the present invention.
[FIG. 8] FIG. 8 is a schematic diagram illustrating an embodiment of the present invention.
[FIG. 9] FIG. 9 is a schematic diagram illustrating an embodiment of the present invention.
[FIG. 10] FIG. 10 is a schematic diagram illustrating an embodiment of the present invention.
[FIG. 11] FIG. 11 is a schematic diagram illustrating an embodiment of the present invention.
[FIG. 12] FIG. 12 is a schematic diagram illustrating an embodiment of the present invention.
[FIG. 13] FIG. 13 is a schematic diagram illustrating an embodiment of the present invention.
[FIG. 14] FIG. 14 is a schematic diagram illustrating an embodiment of the present invention.
[FIG. 15] FIG. 15 is a schematic diagram illustrating an embodiment of the present invention.
[FIG. 16] FIG. 16 is a schematic diagram illustrating an embodiment of the present invention.
[FIG. 17] FIG. 17 is a schematic diagram illustrating an embodiment of the present invention.
[FIG. 18] FIG. 18 is a schematic diagram illustrating an embodiment of the present invention.
[FIG. 19] FIG. 19 is a schematic diagram illustrating an embodiment of the present invention.
[FIG. 20] FIG. 20 is a schematic diagram illustrating an embodiment of the present invention.
[FIG. 21] FIG. 21 is a schematic diagram illustrating an embodiment of the present invention.
[FIG. 22] FIG. 22 is a schematic diagram illustrating an embodiment of the present invention.
[FIG. 23] FIG. 23 is a schematic diagram illustrating an embodiment of the present invention.
[FIG. 24] FIG. 24 is a schematic diagram illustrating an embodiment of the present invention.
[FIG. 25] FIG. 25 is a schematic diagram illustrating an embodiment of the present invention.
[FIG. 26] FIG. 26 is a schematic diagram illustrating an embodiment of the present invention.

### DESCRIPTION OF EMBODIMENTS

Hereinafter, the present invention will be described in more detail based on embodiments shown in the drawings. Hereinafter, a water treatment process flow using an ultrafiltration membrane and a reverse osmosis membrane will be described as an example, but the present invention is not limited to the following embodiments.

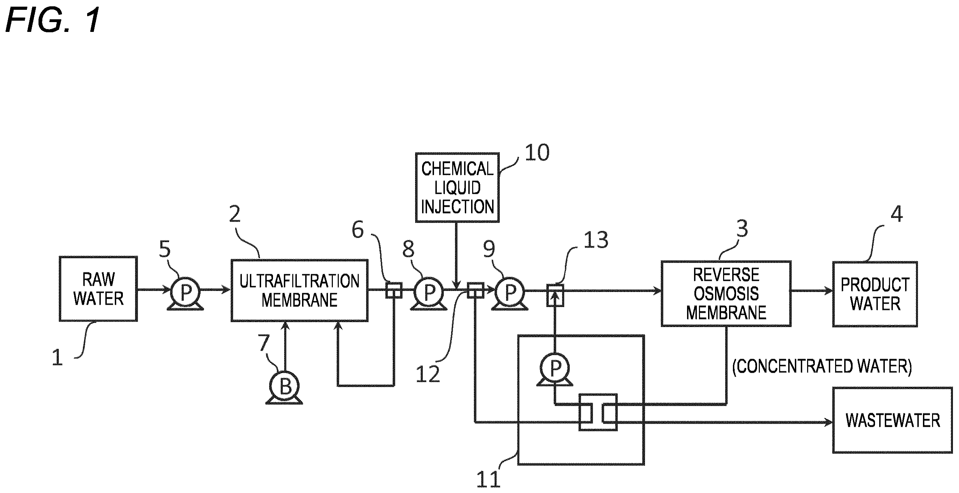

The water treatment process flow of the embodiment is, for example, as illustrated in FIG. 1, a flow in which raw water 1 is treated by using a membrane treatment method of an ultrafiltration membrane 2 and a reverse osmosis membrane 3 to obtain product water 4. In the water treatment process, there are always three types of water flows, i.e., raw water, product water, and wastewater, and the raw water is treated by each water treatment device and finally separated into the product water and the wastewater. The raw water is a solution treated in the water treatment process, and examples thereof include river water, ground water, seawater, sewage treated water, industrial wastewater, and culture solution.

The raw water 1 is pumped by a raw water pump 5 to the ultrafiltration membrane 2 to be filtered. FIG. 1 illustrates the ultrafiltration membrane, but a microfiltration membrane may also be used, a pore diameter of a separation membrane used in the ultrafiltration membrane or the microfiltration membrane is not particularly limited as long as it is porous, and membranes having different pore diameters may be used depending on the properties or an amount of desired water to be treated. Examples of a shape of the separation membrane include, but are not limited to, a hollow fiber membrane, a flat membrane, a tubular membrane, and a monolith membrane. A material of the separation membrane preferably includes at least one selected from the group consisting of polyethylene, polypropylene, polyacrylonitrile, ethylene-tetrafluoroethylene copolymer, polychlorotrifluoroethylene, polytetrafluoroethylene, polyvinyl fluoride, tetrafluoroethylene-hexafluoropropylene copolymer, tetrafluoroethylene-perfluoroalkyl vinyl ether copolymer, chlorotrifluoroethylene-ethylene copolymer, polyvinylidene difluoride, polysulfone, cellulose acetate, polyvinyl alcohol, polyethersulfone and inorganic materials such as ceramics. The material of the separation membrane is more preferably polyvinylidene difluoride (PVDF) from the viewpoint of membrane strength and chemical resistance, and is still more preferably polyacrylonitrile from the viewpoint of high hydrophilicity and high stain resistance. Further, the ultrafiltration membrane has been described, and it is common that the membrane is inserted into a casing to form a module, and a plurality of the modules are used to form a unit depending on operating conditions (raw water properties and amount of filtrated water). A membrane filtration method may be a dead end filtration type module or a cross-flow filtration type, and the dead end filtration type is preferable from the viewpoint of low energy consumption. Further, the module may be a pressurized type or an immersed type, and the pressurized type is preferable from the viewpoint that a high flow flux operation is possible. In addition, the module may be an external pressure type in which raw water is supplied from the outside of the membrane to obtain permeate water from the inside of the membrane or an internal pressure type in which raw water is supplied from the inside of the membrane to obtain permeate water from the outside of the membrane, and the external pressure type is preferable from the viewpoint of simplification of pretreatment.

FIG. 1 illustrates a pressurized type ultrafiltration membrane. Although an immersed type separation membrane is not illustrated, in order to filter a liquid to be treated with the immersed type separation membrane, a pump or the like may be provided on a secondary side of immersed type membrane separation to perform suction, or the liquid to be treated may be filtered using a head pressure difference as a driving force by making a liquid level in a filtrated water tank lower than a liquid level in a tank for a liquid to be treated.

In the case of immersed type membrane separation, air washing is performed continuously or intermittently with air to be supplied from an air blower. Air is supplied from the air blower to an immersed membrane through an air diffuser disposed below the immersed type separation membrane. A resulting flow of a liquid or a gas-liquid mixed phase parallel to a membrane surface separates a suspension adhering to the membrane surface from the membrane surface. In addition, a normal operation sequence includes a filtration step and a stop step, and in general, an operation is performed while the suspension accumulated in the filtration step is peeled from the membrane surface in the stop step while the air washing with the air blower is maintained in both steps.

Here, a membrane to be used for a membrane element constituting the immersed type separation membrane is not particularly limited, and may be a flat membrane or a hollow fiber membrane. A structure of the membrane is not particularly limited, and for example, may be any of a flat membrane element structure, a flat membrane element structure in which a flat membrane is wound in a spiral shape, a flat membrane element structure having flexibility and including a flat membrane pair having two flat membranes arranged such that surfaces on a permeation side face each other and a water collection channel provided between the flat membranes, and a sealing part that seals a space between the flat membranes at peripheral parts of the flat membranes, and a hollow fiber membrane element structure obtained by bundling a plurality of hollow fiber membranes.

Examples of the reverse osmosis membrane includes, as reverse osmosis membrane elements, a spiral-type element that is processed and disposed in a device and in which a membrane having a flat membrane shape is wound around a water collection pipe, a plate and frame-type element modularized by attaching flat membranes to both surfaces of a plate type support plate and laminating the plate type support plates via a spacer at a constant interval, a tubular type element using a tubular membrane, and a hollow fiber membrane element in which hollow fiber membranes are bundled and stored in a case. The element may be in any form, and the spiral-type element is preferable from the viewpoint of operability and compatibility. The number of elements can be freely set according to the membrane performance. As a material, for example, polyamides, polypiperazine amides, polyester amides, or crosslinked water-soluble vinyl polymers can be used, and as a membrane structure thereof, a membrane (asymmetric membrane) having a dense layer on at least one surface of the membrane and fine pores having gradually large pore diameters from the dense layer toward the inside or the other surface of the membrane or a membrane (composite membrane) having a very thin separation functional layer made of another material on the dense layer of such an asymmetric membrane can be used. However, the composite membrane is preferable for high water production, and among these membranes, a polyamide composite membrane is preferable and a piperazine polyamide composite membrane is more preferable from the viewpoint of an amount of permeate water, chemical resistance, and the like.

The ultrafiltration membrane 2 is operated while removing suspension (fouling) captured with the ultrafiltration membrane by periodically performing a physical washing step (backflow washing, air washing, draining wastewater, and supplying water) after a prescribed period of time elapses since the filtration step. In the backwash washing, water filtered by the ultrafiltration membrane 2 is generally used, is branched from a branch 6 of a filtrated water line, and is used for backwashing, or although not illustrated, the filtrated water is pumped to the ultrafiltration membrane by a backwash pump from a filtrated water tank for temporarily storing the filtrated water. An air washing blower 7 is provided for the air washing. An air washing blower is illustrated in the figure, and an air generating source may be a compressor. In the case of the compressor, an oil-free type is preferable such that no oil in the air is supplied to the separation membrane.

In addition, it is preferred to repeat the filtration and the physical washing a plurality of times and then perform chemical liquid enhanced backwashing (CEB). The CEB is performed by supplying a chemical liquid to backwash water using a pump for injecting chemical liquid to backwash water (not illustrated) during backwashing.

As the chemical liquid, a water solution containing a chemical such as hydrochloric acid, sulfuric acid, nitric acid, citric acid, oxalic acid, ascorbic acid, sodium hydrogen sulfite, sodium hydroxide, and sodium hypochlorite can be used. In particular, an oxidizing agent such as sodium hypochlorite is effective for removing contaminants containing organic substances such as seawater, river water, and sewage treated water. A concentration of sodium hypochlorite is preferably 10 mg/L to 10,000 mg/L. This is because if the concentration is less than 10 mg/L, a washing effect is insufficient, and if the concentration is more than 10,000 mg/L, a cost of the chemical becomes high, which is uneconomical. From the viewpoint, the concentration is more preferably 100 mg/L to 5,000 mg/L.

After the chemical liquid is added, the washing effect is improved when a contact time is provided for a certain period of time. A time for which the membrane is brought into contact with the chemical liquid is preferably about 5 minutes to 3 hours. This is because if the contact time is too short, a washing power is weak, and if the contact time is too long, a time for stopping the device is long, and an operation efficiency of the device decreases, which is economical disadvantageous.

Next, the water filtered through the ultrafiltration membrane 2 is pumped by a supply pump 8, pressurized by a high pressure pump 9, and then supplied to the reverse osmosis membrane 3. A chemical such as a sterilizer or a scale inhibitor is injected between the supply pump 8 and the high pressure pump 9 by a chemical injection device 10 in order to prevent fouling or scale of the reverse osmosis membrane 3.

In the reverse osmosis membrane 3, when a salt concentration of raw water is high such as a case of seawater desalination, a supply pressure may be increased to about 8 MPa by the high pressure pump 9 in order to obtain an effective osmotic pressure. Therefore, an energy recovery device 11 may be provided in order to effectively utilize the energy. The illustrated energy recovery device is a pressure exchange type, and includes an energy recovery device main body and a booster pump. The energy recovery device applies pressure of concentrated water to be discharged from the reverse osmosis membrane 3 to water to be supplied to the reverse osmosis membrane, which is branched at a branch 12 from the middle between the supply pump 8 and the high pressure pump 9. The concentrated water of the reverse osmosis membrane 3 is discharged as concentrated water after pressure loss in a raw water side channel of the reverse osmosis membrane 3, and has a pressure lower than a supply pressure of the reverse osmosis membrane 3 due to piping pressure loss of a concentrated water line or pressure loss of the energy recovery device, and lower than a discharge pressure of the high pressure pump 9 even though the pressure is applied to the water to be supplied to the reverse osmosis membrane, which is branched from the middle between the supply pump 8 and the high pressure pump 9, and thus the booster pump is installed to increase the pressure. The pressurized supply water is merged at a junction 13 between the high pressure pump 9 and the reverse osmosis membrane 3. Although the pressure exchange type is illustrated in the figure, a reverse pump type, a water turbine type, and a turbocharger may be used.

As described above, the water treatment process flow is constituted by a combination of the water flows (raw water, product water, and wastewater), the water treatment devices (ultrafiltration membrane and reverse osmosis membrane (although not illustrated, sedimentation separation, flotation separation, centrifugation, coagulation treatment, stirring treatment, aerobic treatment, anaerobic treatment, filtration, squeezing, filter cloth, nanofiltration membrane, accelerated oxidation, ion exchange, adsorption, absorption, deaeration, crystallization, distillation, heat exchange, and mineral addition may be used)), the energy recovery devices (reverse pump type, water turbine type, pressure exchange type, and turbocharger), a chemical liquid injection device, equipment (pump, blower, compressor, tank), and piping connection (mixing and branching), and the water treatment process is calculated using these elements individually and in conjunction with each other.

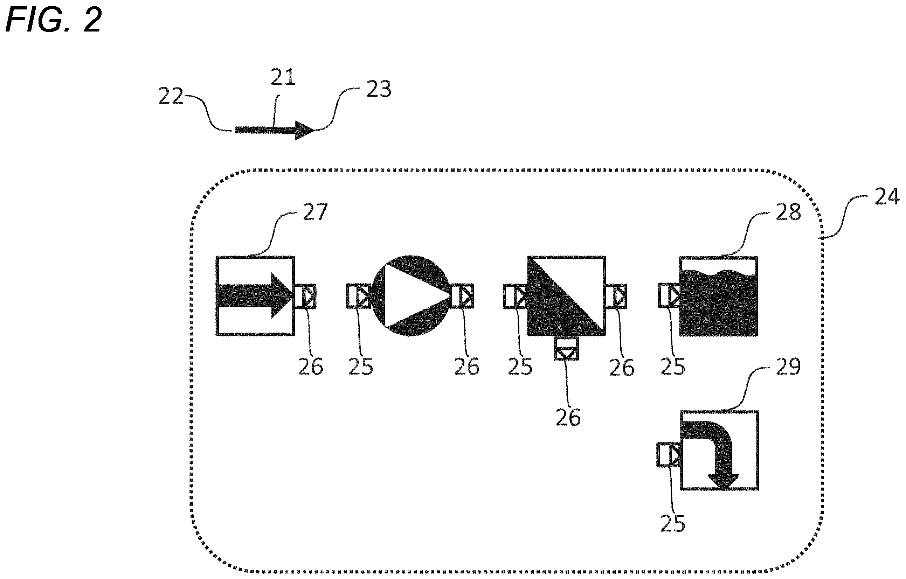

The water treatment process flow is generally shown on a computer screen. As illustrated in FIG. 2, a water flow is indicated by a stream 21 indicating a flow of water, and a direction of the flow is represented by indicating an upstream end 22 and a downstream end 23 of the stream with arrows. In addition, steps in the water treatment process are generally represented by unit icons 24 that simulate the respective steps. Each unit icon usually includes at least one input part 25 and at least one output part 26. However, a most upstream stream or a most downstream stream may be shown as a unit icon including only an output part or only an input part, respectively. For example, in FIG. 2, a raw water unit icon 27 is a most upstream unit icon including only one output part 26, and a final product water unit icon 28 and a final wastewater unit icon 29 are most downstream unit icons each including only one input part 25.

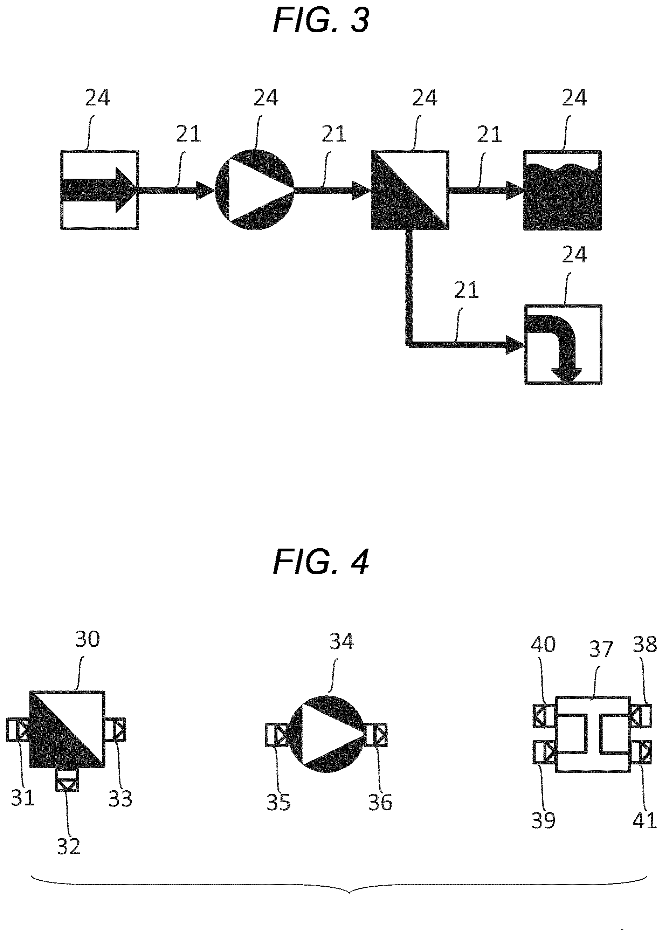

As illustrated in FIG. 3, the water treatment process flow is shown by connecting the output part of each unit icon 24 to the upstream end of each stream 21 and connecting the input part of each unit icon 24 to the downstream end of each stream 21.

The unit icons represent the water treatment devices (ultrafiltration membrane and reverse osmosis membrane (although not illustrated, sedimentation separation, flotation separation, centrifugation, coagulation treatment, stirring treatment, aerobic treatment, anaerobic treatment, filtration, squeezing, filter cloth, nanofiltration membrane, accelerated oxidation, ion exchange, adsorption, absorption, deaeration, crystallization, distillation, heat exchange, and mineral addition may be used)), the energy recovery devices (reverse pump type, water turbine type, pressure exchange type, and turbocharger), a chemical liquid injection device, equipment (pump, blower, compressor, tank), and piping connection (mixing and branching).

For example, as illustrated in FIG. 4, a reverse osmosis membrane unit icon 30 generally has only one reverse osmosis membrane supply water inlet 31 as an input part, and a reverse osmosis membrane concentrated water outlet 32 and a reverse osmosis membrane permeate water outlet 33 as output parts. Further, the pump unit icon 34 generally has only one pump supply water inlet 35 as an input part, and only one pump discharge port 36 as an output part. In addition, as the energy recovery device, for example, a pressure exchange type energy recovery device unit icon 37 generally has a high-pressure side inlet 38 and a low-pressure side inlet 39 as input parts, and a high-pressure side outlet 40 and a low-pressure side outlet 41 as output parts.

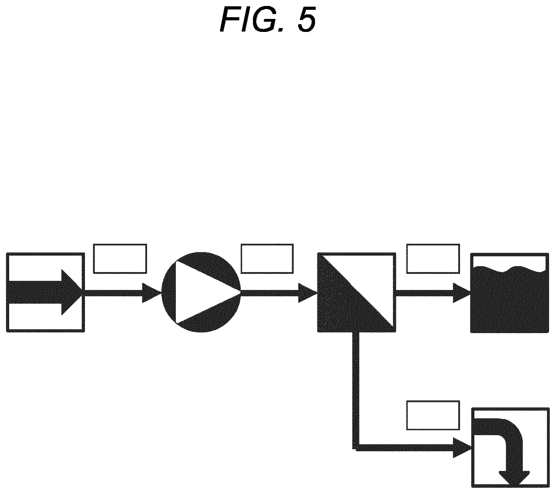

In the process calculation for a water treatment process, no flow rate of each stream is determined when a water treatment process flow including streams and unit icons is made. In such a state, the flow rate of each stream is generally displayed as blank or zero on the screen. FIG. 5 illustrates an example in which the flow rate of each stream is displayed as blank. From such a state, in order to obtain realistic flows, it is necessary to assume a state in which a water balance is consistent. When one obtained by cutting out a part or all of the water treatment process flow is regarded as a system, the water balance is a difference between a total flow rate of water flowing into the system and a total flow rate of water flowing out of the system. In an actual water treatment process, a total of inflow mass flow rates and a total of outflow mass flow rates always accurately coincide with each other according to the law of mass conservation. In addition, a specific gravity of water is substantially constant under conditions of a general water treatment process, and thus the total inflow and the total outflow can be considered to coincide with each other even in terms of volume flow rate, and a water treatment process is generally designed on this premise. In the present invention, the expression "the water balance is consistent" or "there is no contradiction in a water balance" means that a total volume flow rate of water flowing into a certain system and a total volume flow rate of water flowing out of the system coincide with each other (hereinafter, the flow rate simply refers to the volume flow rate). This is established when any part of the process is cut out, for example, the entire process may be regarded as a system, or one unit icon may be regarded as a system. In the present invention, a total water balance is adjusted by adjusting the water balance in a unit icon for all the unit icons. A determination criterion as to whether the total volume flow rates coincide with each other may be determined based on an accuracy required in the water treatment process flow under consideration, and may be determined, for example, such that a ratio of a total input value to a difference between the total input value and a total output value is a predetermined value of 0.1% or less.

As described above, in the process calculation for a water treatment process, it is necessary to determine each stream flow rate so that there is no contradiction in the water balance in order to obtain realistic flows.

As a method for determining a state in which the water balance is consistent from a state in which each stream is blank and software including the method, for example, there is a method in which the user sets only a flow rate of a stream output from a most upstream unit icon, and flow rates of other streams are automatically calculated by performing a water balance calculation for each of the unit icons from upstream to downstream. In this method, even in a flow freely configured by the user or a flow including circulation, the water balance can be adjusted for all the unit icons by repeatedly performing a water balance calculation for each of the unit icons from upstream to downstream. However, while such a method and the software that uses the method are useful for once finding a state in which there is no contradiction in the water balance, the user cannot freely set a flow rate of a specific stream on a downstream side to any value.

Furthermore, in an actual facility design, there are most cases in which there are design restrictions on the flow rate of the specific stream, and in many cases, the flow rate of such a stream is fixed to a value desired by the user or is variously changed within a range of desired values, and a flow design that is desirable is performed through trial and error while confirming what value the flow rates of the other streams become. In such a case, the water balance becomes inconsistent when the user changes the flow rate of the specific stream from a state in which a flow rate of each of the streams is once determined without contradiction in the water balance, and thus it is necessary to change the flow rates of streams other than the stream whose flow rate is changed by the user in order to match the water balance again to a state in which there is no contradiction in the water balance. Therefore, in software capable of setting a flow rate of a specific stream that is not a most upstream stream, there is a method by which a water balance is calculated propagatively among each adjacent unit icon around the specific stream without contradiction. However, with such software, a flow configuration needs to be limited to a configuration assumed in advance, and a general-purpose calculation method that can be applied to any water treatment process flows is not established. In addition, even though the flow rate of the specific stream is fixed to a value desired by the user, there may be a plurality of or an infinite number of combinations of the flow rates of the other streams that can be established without contradiction in the water balance, and it is necessary to obtain user-friendly results based among the combinations.

As described above, the calculation method is not established in which the user freely configures the flow, sets the flow rate of the specific stream, and calculates the flow rate of each of the streams without contradiction in the water balance.

Therefore, the present invention relates to a general-purpose method in which in a water treatment process calculation for a freely designed water treatment process flow, when a flow rate of a specific stream is changed from a state in which a flow rate of each of streams is once determined without contradiction in a water balance, flow rates of other streams are determined without contradiction in the water balance, and has the following method illustrated in FIG. 2 to FIG. 26 as an embodiment.

Such a process calculation for a water treatment process is generally performed by simulating a water treatment flow using a water treatment process calculation program on a computer. A process calculation method for a water treatment process according to the embodiment of the present invention includes: a step 1 of creating a water treatment process flow diagram simulating a real water treatment process flow by arranging unit icons corresponding to water treatment units on a screen and connecting streams each representing a flow of water to input terminals or output terminals of the respective unit icons; a step 2 of once setting flow rates of the respective streams on the water treatment process flow diagram so that there is no contradiction in a water balance for each of the unit icons; a step 3 of changing and determining any one of the flow rates of the streams determined in step 2 to any value; a step 4 of calculating and determining flow rates of all the streams that are calculable necessarily based on the determined flow rates of the streams; a step 5 of selecting one unit icon connected to any one or more of the streams whose flow rates are determined, and calculating and determining the flow rates of all the streams which are connected to the selected unit icon according to a priority order set for each of the unit icons; and a step 6 of repeating steps 4 to 5 until the flow rates of all the streams are determined.

In step 2 of the embodiment of the present invention, a method for setting a state in which a water balance is consistent from a state in which each stream is blank is not limited, for example, there is a method in which the user sets only a flow rate of a stream output from a most upstream unit icon, and flow rates of other streams are automatically calculated by performing a water balance calculation for each unit icon from upstream to downstream. In addition, there is a method in which the user manually calculates values having no contradiction for flow rates of streams in advance, and manually inputs the values as the flow rates of the streams on software one by one. It is not a technical difficulty for an engineer of a water treatment process having ordinary skill to determine a state in which a water balance is consistent, and this method is not described in detail. In addition, there is also a method in which a user puts any value into a flow rate of any blank stream and locally performs a water balance calculation. In addition, a combination thereof is also conceivable.

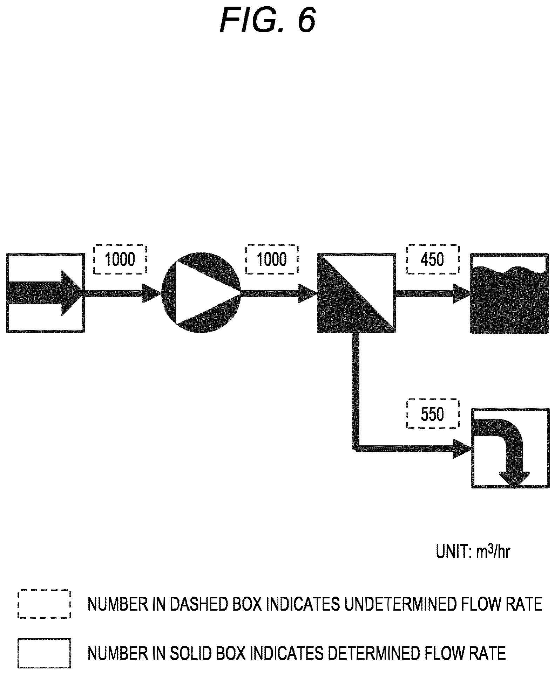

In step 3 of the embodiment of the present invention, the user selects any one of the streams in a state in which the flow rates of all the streams have been set without contradiction in the water balance, and changes and determines a flow rate thereof to any value. The state in which the flow rates of all the streams have been set without contradiction in the water balance is, for example, a state illustrated in FIG. 6.

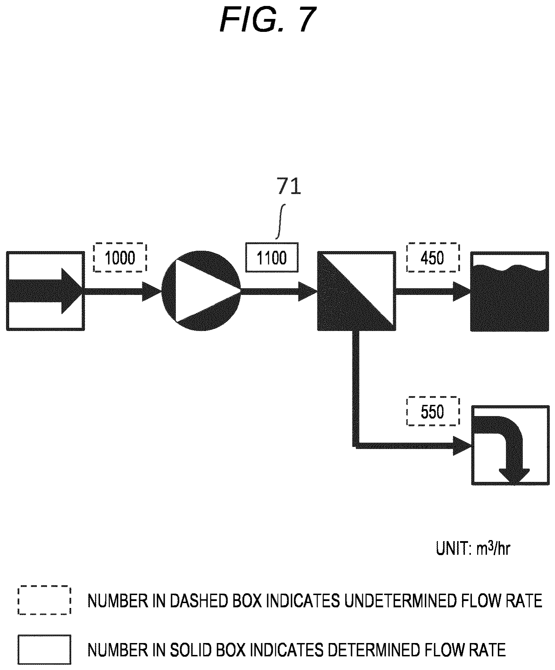

In principle, the expression "determining the flow rates of the streams" means that the flow rates are not changed in the subsequent steps of the embodiment of the present invention. That is, according to the method of the embodiment of the present invention, from the state in which the flow rates of all the streams are not determined, the flow rates of all the streams are determined one by one and finally all the flow rates are determined. However, in the reset when there is contradiction, the determined flow rates may change, which will be described later. FIG. 7 illustrates a state in which a stream flow rate 71 selected by the user is changed and determined to any value. In step 2 of the embodiment of the present invention, the water balance is once consistent, but the flow rates of all the streams are considered to be in an undetermined state at that time.

In step 4 of the embodiment of the present invention, the flow rates of all the streams that are calculable necessarily based on the flow rates of the streams that are determined in the previous steps are calculated and determined.

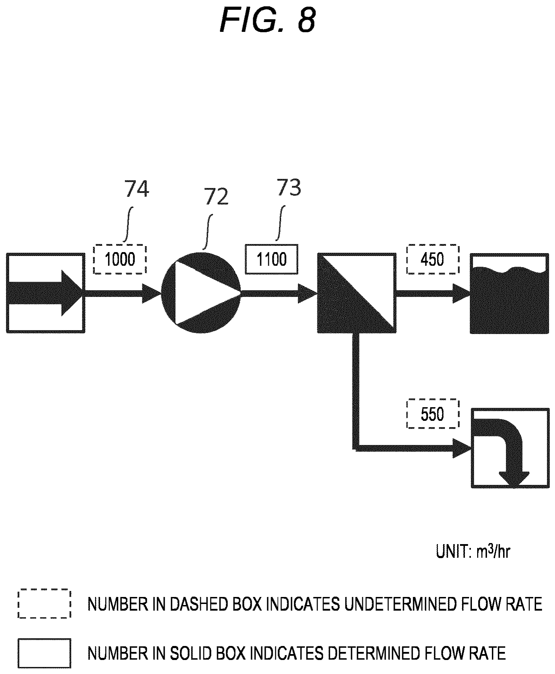

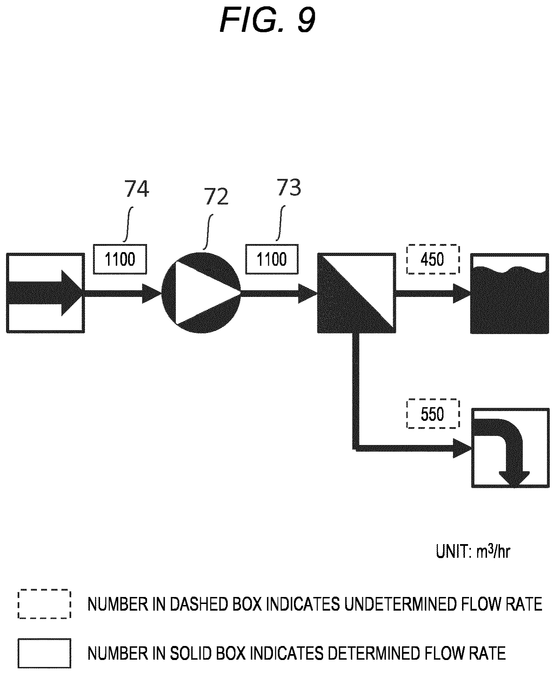

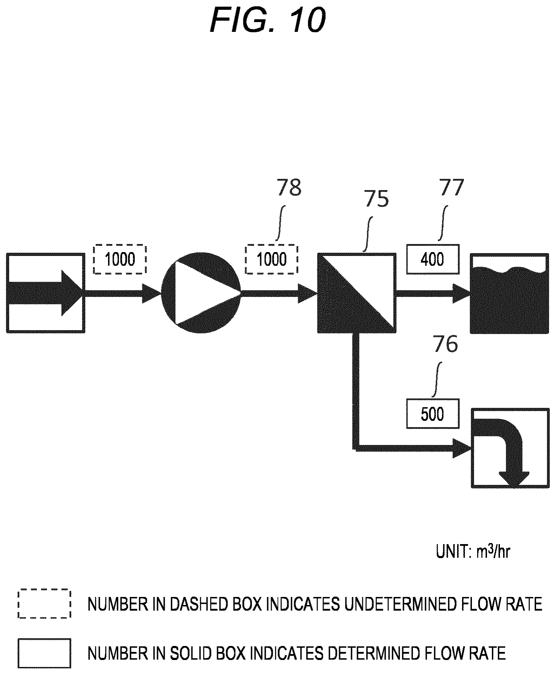

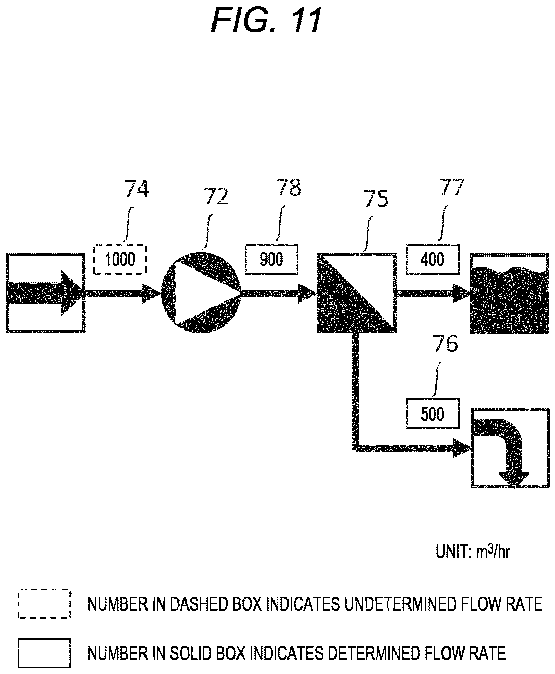

The expression "being calculable necessarily" means that, among the streams connected to a unit icon, a flow rate of a stream which is not determined can be uniquely resolved so that the water balance is consistent. For example, there is a case in which all the flow rates are determined except for one of the streams connected to a certain unit icon, and in this case, a case in which the water balance is consistent with the remaining one stream is always limited to one, and thus the flow rates of all the streams are calculable necessarily. For example, in FIG. 8, two streams are connected to a pump unit icon 72. A pump discharge port flow rate 73 among the two streams is already determined, and thus a pump supply water inlet flow rate 74, which is the remaining one, is calculable necessarily, and the pump supply water inlet flow rate 74 is calculated and determined in this step, resulting in a state illustrated in FIG. 9. Among flow rates of three streams connected to a reverse osmosis membrane unit icon 75 in FIG. 10, a reverse osmosis membrane concentrated water outlet flow rate 76 and a reverse osmosis membrane permeate water outlet flow rate 77 are already determined, and thus a reverse osmosis membrane supply water inlet flow rate 78, which is remaining one, is calculable, and the reverse osmosis membrane supply water inlet flow rate 78 is calculated and determined in this step, resulting in a state illustrated in FIG. 11.

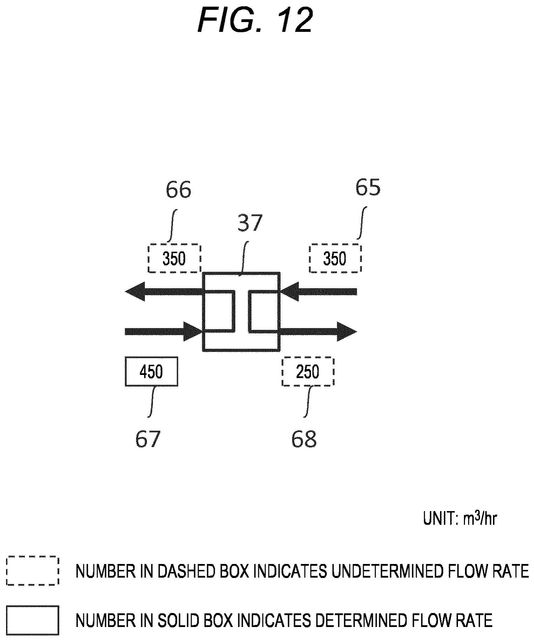

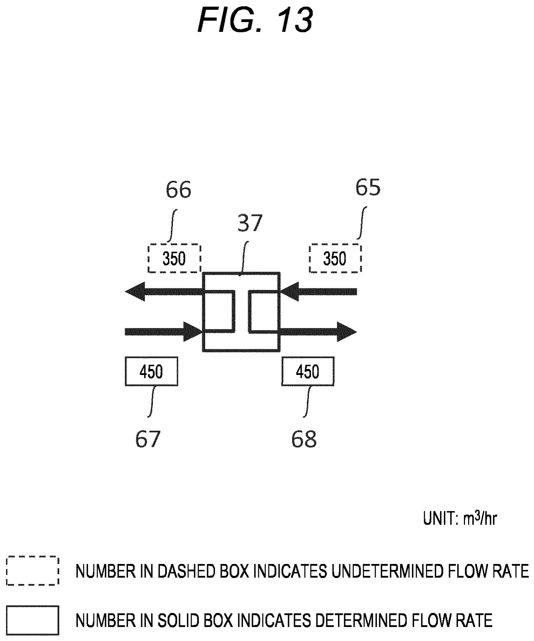

In the other cases that are calculable necessarily, for example, when a unit icon is the pressure exchange type energy recovery device unit icon 37 as illustrated in FIG. 12, a high-pressure side inlet flow rate 65 and a high-pressure side outlet flow rate 66 are generally equal to each other, and a low-pressure side inlet flow rate 67 and a low-pressure side outlet flow rate 68 are generally equal to each other, and thus when one in the pair of flow rates is determined, the other necessarily has the same value. In FIG. 12, the low-pressure side inlet flow rate 67 is determined as 450 m³/hr, and thus the corresponding low-pressure side outlet flow rate 68 is calculable necessarily to be 450 m³/hr, and the flow rate is calculated and determined in this step, resulting in a state illustrated in FIG. 13.

In step 4, if determining the necessarily calculable flow rate of the stream causes another stream's flow rate to become necessarily calculable, the flow rate of the new stream is also calculated and determined. For example,

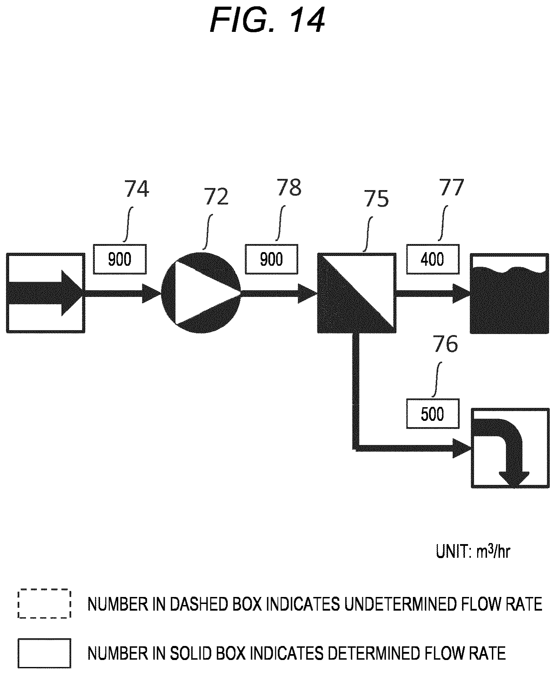

FIG. 11 illustrates a state in which the reverse osmosis membrane supply water inlet flow rate 78, which is calculable necessarily based on the state of FIG. 10, has been calculated and determined, and the reverse osmosis membrane supply water inlet flow rate 78 is a pump discharge port flow rate when viewed from the pump unit icon 72. Since one stream of the two streams connected to the pump unit icon 72 has been determined, the pump supply water inlet flow rate 74, which is the remaining one, is calculable necessarily, and the pump supply water inlet flow rate 74 is calculated and determined in this step, resulting in a state illustrated in FIG. 14. In this step, the flow rates of the streams, which are calculable necessarily, are determined in a chain manner until there is no calculable stream.

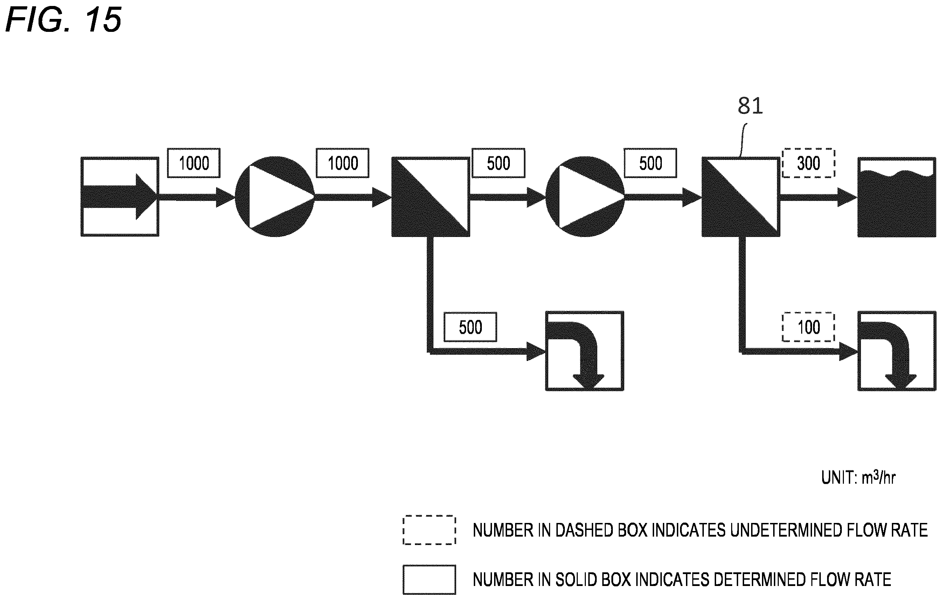

In step 5 of the embodiment of the present invention, one unit icon which is connected to any one or more of the determined streams and in which at least one or more stream flow rates are not determined is selected, and the flow rates of all the streams connected to the unit icon are calculated and determined according to the priority order set for each of the unit icons. For example, in FIG. 15, the only unit icon which is connected to the determined stream and in which at least one or more stream flow rates are not determined is a second-stage reverse osmosis membrane unit icon 81, and thus the second-stage reverse osmosis membrane unit icon 81 is selected.

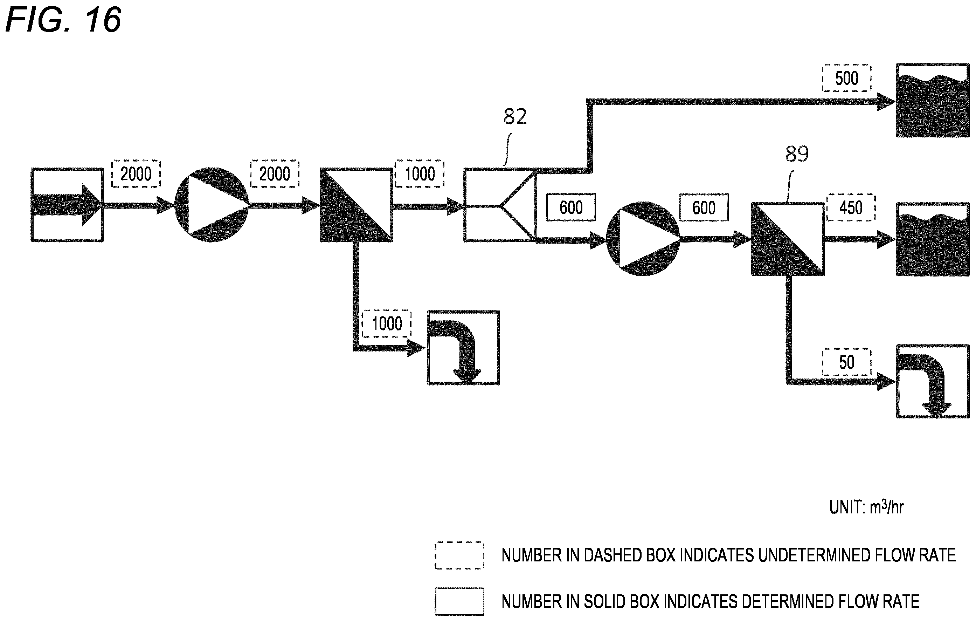

In step 5, when there are a plurality of unit icons which are connected to any one or more of the determined streams and in which at least one or more stream flow rates are not determined, any of these unit icons may be selected, but when there is a reverse osmosis membrane unit icon among these unit icons, it is more preferable to select the reverse osmosis membrane unit icon. This is because a flow rate of the reverse osmosis membrane is often important in the simulation of the water treatment process, and user-friendly results can be obtained in many cases by preferentially performing a calculation on the reverse osmosis membrane. For example, in FIG. 16, there are two unit icons, that is, a branch unit icon 82 and a second-stage reverse osmosis membrane unit icon 89, which are connected to the determined streams and in which at least one or more stream flow rates are not determined, and in the embodiment of the present invention, either of these unit icons may be selected, but it is more preferable to select the second-stage reverse osmosis membrane unit icon 89.

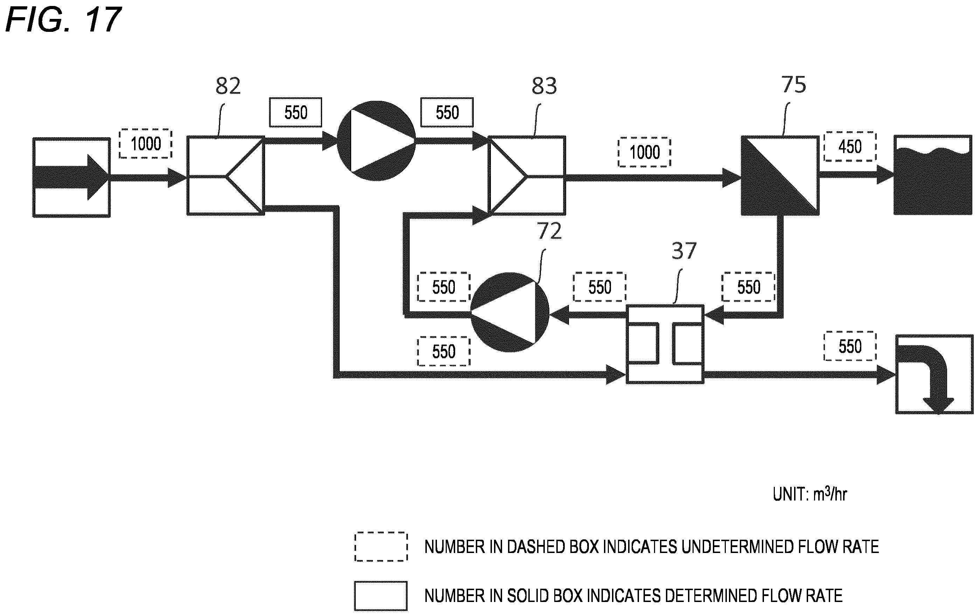

In step 5, when there are a plurality of unit icons which are connected to any one or more of the determined streams and in which at least one or more stream flow rates are not determined, any of these unit icons may be selected, but it is more preferable to select a unit icon which is located further downstream among these unit icons. This is because a flow rate of a final product water which is located most downstream is often more important in the simulation of the water treatment process, and the user-friendly results can be obtained in many cases by performing a calculation toward the downstream side in this way. For example, in FIG. 17, there are two unit icons, that is, the branch unit icon 82 and a junction unit icon 83, which are connected to the determined streams and in which at least one or more stream flow rates are not determined, and in the embodiment of the present invention, either of these unit icons may be selected, but it is more preferable to select the junction unit icon 83 which is located further downstream.

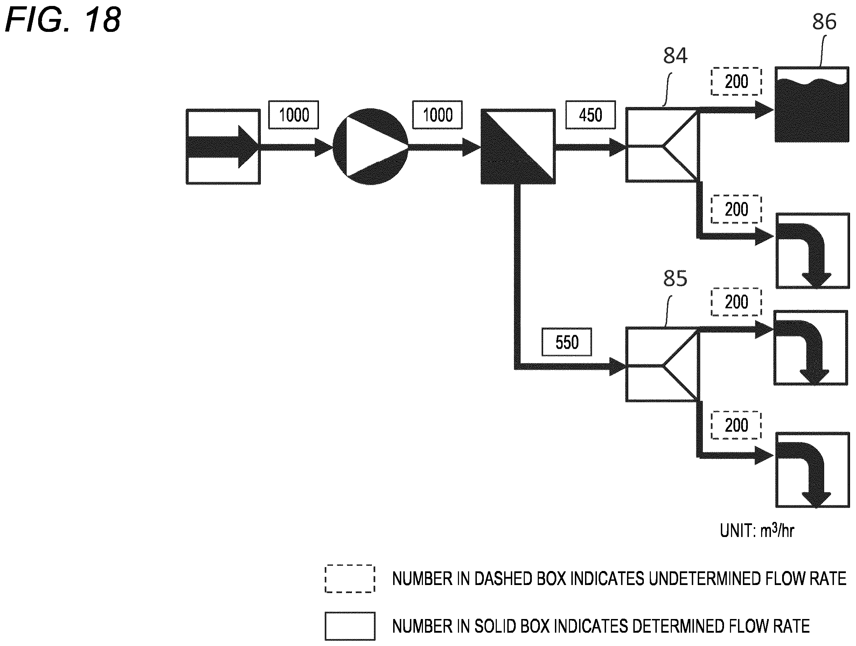

Furthermore, when there are a plurality of downstream unit icons, any one of these icons may be selected, but it is more preferable to regard unit icons closer to the final product water among the downstream unit icons as unit icons which are located further downstream. For example, in FIG. 18, there are two unit icons, that is, a reverse osmosis membrane permeate water branch unit icon 84 and a reverse osmosis membrane concentrated water branch unit icon 85 which are connected to the determined streams and in which at least one or more stream flow rates are not determined, these unit icons are equally downstream, but the reverse osmosis membrane permeate water branch unit icon 84 is closer to the final product water unit icon 86, and thus it is more preferable to select the reverse osmosis membrane permeate water branch unit icon 84.

However, in a process in which there are a plurality of final product water or in a process that includes circulation, it may not be clear which unit icon is close to the final product water or which unit icon is located downstream. In such a case, a determination criterion may be appropriately determined such that the unit icon that is located substantially downstream is selected in consideration of ease of implementation on the program. The expression "selecting a unit icon that is located substantially downstream" means selecting a unit icon in accordance with a certain determination criterion such that a downstream unit icon is selected without being suspected in most cases. As an exception, a case in which an upstream unit icon is clearly selected, or a case in which it is difficult to easily determine which is located downstream may be included, but it is more preferable to select the downstream unit icons without being suspected in 90% or more cases. For example, in the case of software in which a direction from a left side to a right side of a screen substantially corresponds to a direction from upstream to downstream of the water treatment process flow, the determination criterion may be such that a unit icon further to the right is regarded as a unit icon that is located further downstream. This is because, as long as the method is a method of selecting a unit icon that is located substantially downstream, an actual operation is not changed much by using any method, and user-friendly results can be obtained without contradiction in the water balance.

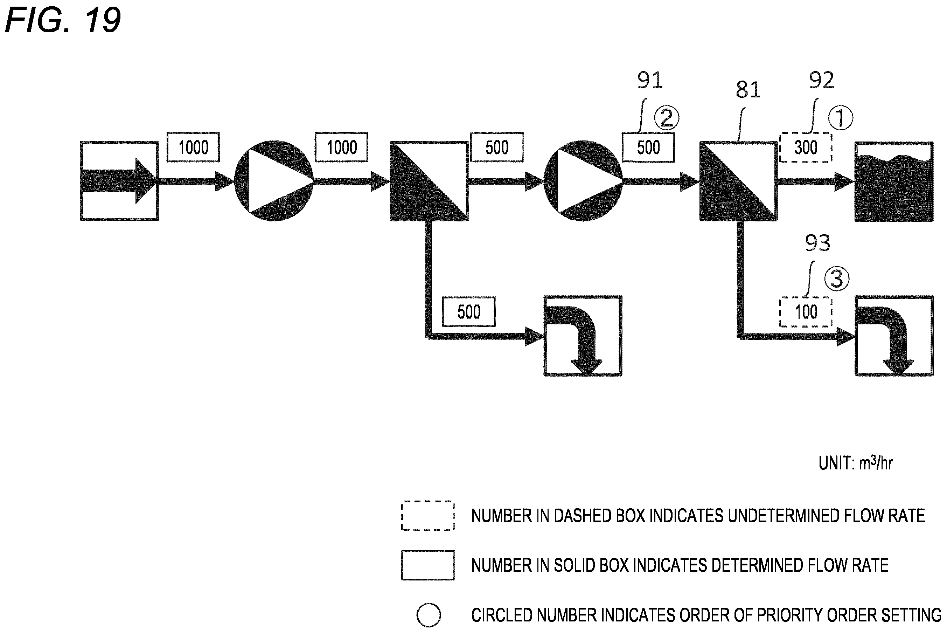

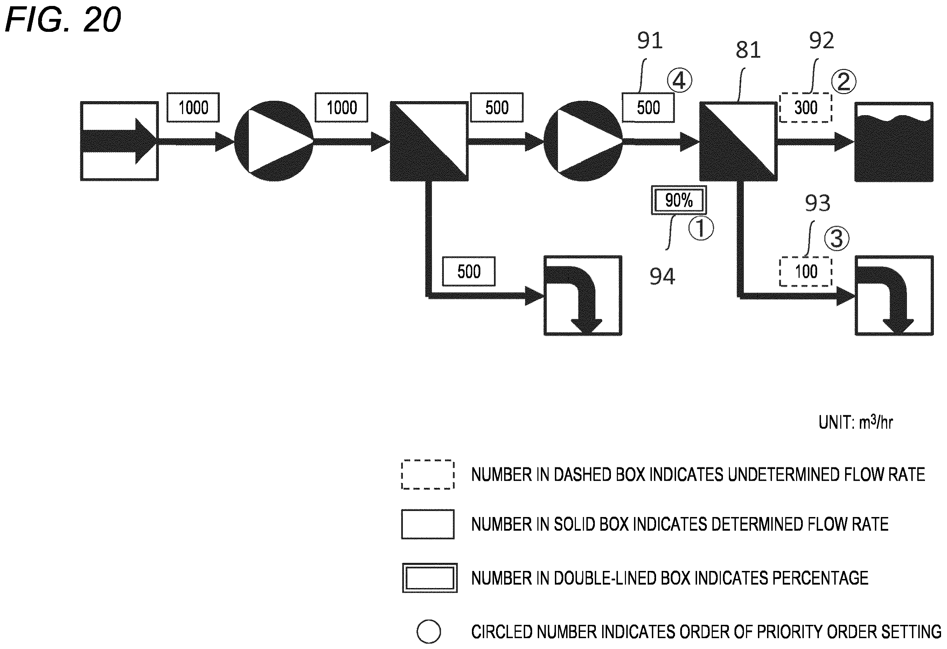

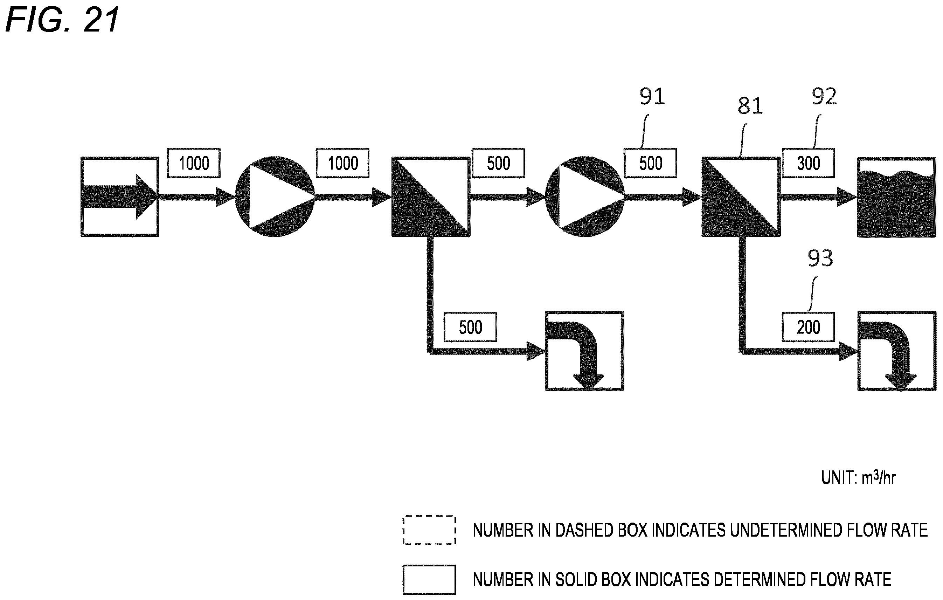

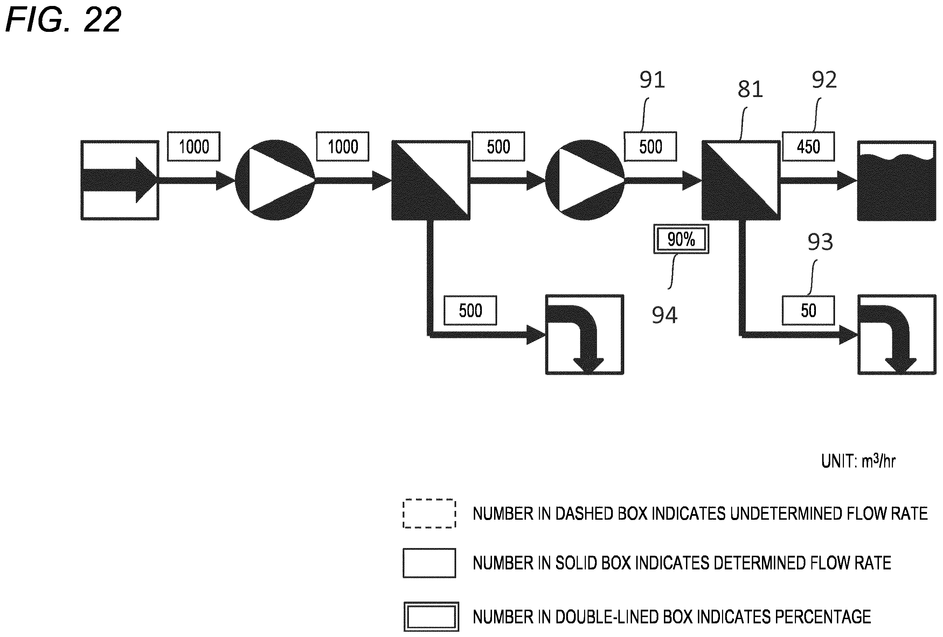

The unit icon selected in step 5 is a unit icon which necessarily, in algorithmic terms, includes three or more input parts and output parts in total, and one or more of the connected streams of which are in a flow rate-determined state and one or more of the connected streams of which are in a flow rate-undetermined state. In step 5, all the undetermined flow rates of the streams connected to the selected unit icon are determined according to the determined flow rates and the priority order set for each of the unit icons. The priority order set for each of the unit icons is a priority order setting as to which stream flow rate is preferentially determined among the plurality of connected streams when there are undetermined flow rates at that time. For example, in FIG. 19, it is assumed that the priority order setting is performed as indicated by circled numbers. A method for setting priority order is not particularly limited, and may be set in advance in a fixed manner on the software based on the type of unit icons, may be set automatically using a certain algorithm, may be freely selected by the user, or may be a combination of these. However, it is preferable to perform the priority order setting for the connected streams in an order in which the user wants to give priority, that is, in order in which the user does not want to change values of the flow rates as much as possible. This is because, by performing the priority order setting in this manner, the user-friendly results can be often obtained. The priority order setting set for each of the unit icons may be not only a single stream flow rate but also a percentage calculated based on the stream flow rates. For example, in FIG. 20, the priority order setting is performed as indicated by circled numbers, and a reverse osmosis membrane recovery rate 94 (that is, a value obtained by dividing a flow rate of reverse osmosis membrane permeate water by a flow rate of reverse osmosis membrane supply water) is set as a first priority order in the streams connected to the reverse osmosis membrane unit icon 81. In step 5, all the undetermined flow rates of the streams connected to the selected unit icon are determined based on the determined flow rates and highly prioritized flow rates (or percentages) among the priority order settings set for each of the unit icons. Specifically, for example, in FIG. 19, when the unit icon selected in step 5 is the reverse osmosis membrane unit icon 81, a reverse osmosis membrane concentrated water outlet flow rate 93 (undetermined flow rate is 100 m³/hr) is calculated as 200 m³/hr so as to match the water balance based on a determined flow rate of 500 m³/hr of a reverse osmosis membrane supply water inlet flow rate 91 and an undetermined but a most prioritized flow rate of 300 m³/hr of a reverse osmosis membrane permeate water outlet flow rate 92, and all of the flow rates are determined, resulting in a state illustrated in FIG. 21. In FIG. 20, when the unit icon selected in step 5 is the reverse osmosis membrane unit icon 81, based on the determined flow rate of 500 m³/hr of the reverse osmosis membrane supply water inlet flow rate 91 and a value 90% of the reverse osmosis membrane recovery rate 94 having a highest priority, the reverse osmosis membrane permeate water outlet flow rate 92 (undetermined flow rate is 300 m³/hr) and the reverse osmosis membrane concentrated water outlet flow rate 93 (undetermined flow rate is 100 m³/hr) are calculated as 450 m³/hr and 50 m³/hr, respectively, and all of the flow rates are determined, resulting in a state illustrated in FIG. 22. The priority order does not need to be determined for all the streams connected to the unit icon, and may be a number necessary for determining the flow rate.

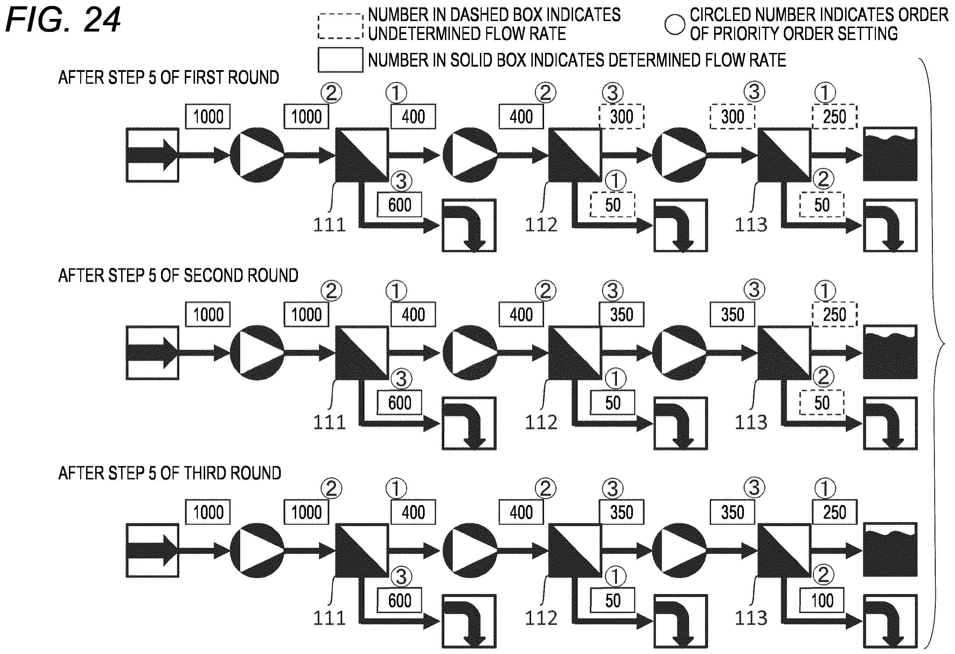

In step 6 of the embodiment of the present invention, steps 4 to 5 are repeated until the flow rates of all the streams are determined. FIG. 24 illustrates an example in which the flow rates of all the streams are determined by repeating steps 4 and 5 three times. Each of circled numbers in FIG. 24 indicates a priority order set for each of the unit icons, but these are shown only for the reverse osmosis membrane units, and omitted for other unit icons. An upper stage in FIG. 24 indicates a time point at which step 5 is completed for the first time, and the determination of flow rates of all streams connected to a first-stage reverse osmosis membrane unit icon 111 and the determination of the flow rates of the streams that can be necessarily calculated accordingly are completed. A middle stage in FIG. 24 indicates a time point at which step 5 is completed for the second time, and the determination of flow rates of all streams connected to a second-stage reverse osmosis membrane unit icon 112 and the determination of the flow rates of the streams that are calculable necessarily accordingly are completed. A lower stage in FIG. 24 indicates a time point at which step 5 is completed for the third time, and the determination of flow rates of all streams connected to a third-stage reverse osmosis membrane unit icon 113 and the determination of the flow rates of the streams that are calculable necessarily accordingly are completed.

As described above, according to steps 1 to 6, even in the water treatment process flow freely created by the user, it is possible to determine user-friendly stream flow rates that have no contradiction in the water balance in many cases.

By determining the flow rates using the method of one embodiment of the present invention, the flow rate of each of the streams can be determined without contradictions in the water balance in many cases, but in steps 4 to 6, there may be rare cases in which some of the flow rates become negative values or there is a contradiction such as an inconsistent water balance. In such a case, it is preferable to forcibly return the flow rates of the streams on the software to a state before the user changes a flow rate of any stream to any value in step 3, that is, a state after the flow rate of each of the streams is once set without contradiction so that there is no contradiction in the water balance for each of the unit icons in step 2. In addition, it is preferable to notify the user of the occurrence of such a failure displaying it as an error message. After the flow rates of the streams are forcibly returned on the software to the state after the flow rate of each of the streams is once set without contradiction so that there is no contradiction in the water balance for each of the unit icons in step 2, step 3 is repeated again. In this case, it is preferable for the user to select a different stream from the previous time, or to select the same stream as the previous time and change a flow rate thereof to a different value from the previous time. This is because when the same stream as the previous time is selected and the same flow rate as the previous time is set, the contradiction occurs again.

The present invention is preferably used particularly when the water treatment process flow includes circulation. The term "circulation" means that, when repeatedly tracing from one unit icon to another unit icon connected downstream through a stream, it finally returns to the initial icon. For example, the water treatment process flow as illustrated in FIG. 17 is a water treatment process flow including circulation since when the reverse osmosis membrane unit icon 75, the pressure exchange type energy recovery device unit icon 37, and the pump unit icon 72 are traced in a downstream direction from the junction unit icon 83, a water flow thereof returns to the junction unit icon 83. In the related art, in such a process including circulation, in a method of calculating flow rates of streams starting from upstream, when a circulation part from downstream is calculated, the downstream flow rates are not yet calculated, and thus the flow rates cannot be determined at that point. Instead, provisional calculations are once performed up to a downstream-most point, and then repetitive calculations are performed by going back upstream and recalculating. This method determines the flow rates without contradiction in the water balance for the entire process and each of the unit icons. However, this method has a problem in that the user cannot freely set the flow rate of any downstream stream, or even if the flow rate can be set once, the value changes during the repetitive calculations . According to the embodiment of the present invention, even in such a water treatment process flow including circulation, the user can freely set the flow rate of any downstream stream, and determine the flow rate of each of the streams without contradiction in the water balance.

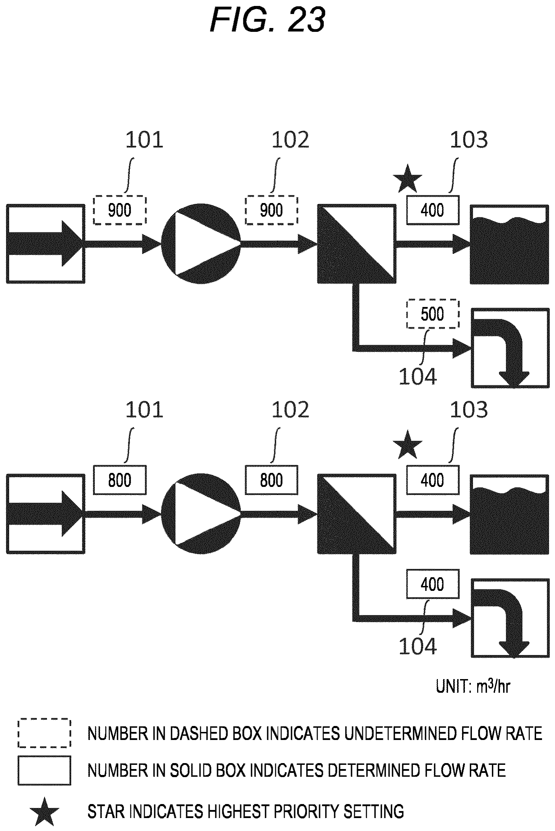

In the embodiment of the present invention, a stream desired to have a highest priority may be set as a highest priority stream before step 3, and a flow rate of the highest priority stream may be determined before or after step 3. The highest priority stream is a stream whose flow rates are not desired to be changed the most. The highest priority stream may be set in advance by the program for a stream whose flow rate is not typically desired to be changed the most, but it is preferable that the highest priority stream can be selected by the user. This is because the water treatment process flow can be examined while a flow rate of a stream which is most important to the user is fixed to a constant value. For example, an upper diagram in FIG. 23 illustrates a state before step 3 and a state in which the highest priority stream is set by the user, and the reverse osmosis membrane permeate water outlet flow rate 103 is set and determined as the highest priority stream (indicated by a star). From this state, when the user changes and determines a flow rate of a pump supply water inlet flow rate 101 to 800 m³/hr in step 3, a flow rate of a reverse osmosis membrane supply water inlet flow rate 102 is necessarily calculated and determined to be 800 m³/hr in step 4, and then a flow rate of a reverse osmosis membrane concentrated water outlet flow rate 104 is also necessarily calculated and determined to be 400 m³/hr from the water balance based on the determined values of the reverse osmosis membrane supply water inlet flow rate 102 and the reverse osmosis membrane permeate water outlet flow rate 103, finally resulting in a state in a lower diagram in FIG. 23.

Although a plurality of the highest priority streams may be set, it is most preferable to set only one as the highest priority stream because a possibility of occurrence of the above contradiction is increased by determining the highest priority stream before or after step 3, and the possibility of occurrence of the contradiction is further increased as the number of the highest priority streams increases.

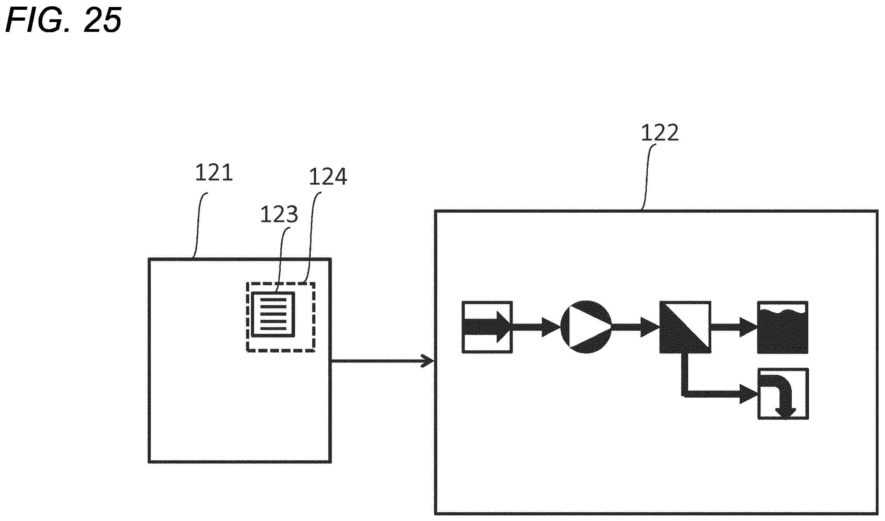

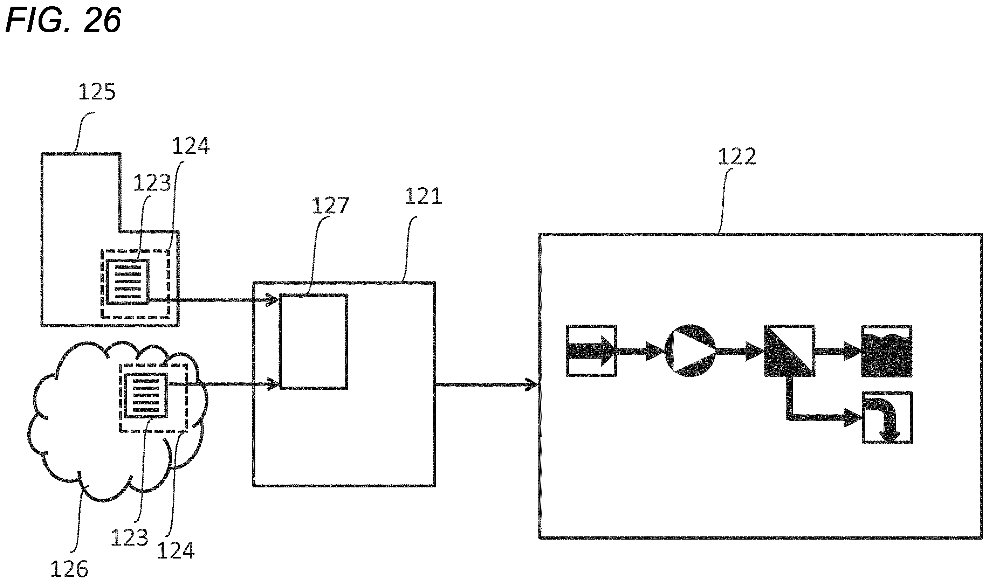

In the embodiment of the present invention, as illustrated in FIG. 25, the water treatment process calculation method may be stored in a recording medium 124 as a water treatment process calculation program 123 for running on a computer 121 and displaying on a screen 122. In addition, a system for storing the recording medium 124 may be a stand-alone computer such as the computer 121 illustrated in FIG. 25, or may be an on-premise server 125 or a cloud server 126 as illustrated in FIG. 26. As described above, in a case in which the water treatment process calculation program 123 is stored in the recording medium 124 on the server, it is more preferred that the system accesses the program via a browser 127 on the computer and executes the water treatment process calculation program 123 to perform a calculation.

According to the water treatment process calculation program 123, the present invention is implemented by causing the computer 121 and the screen 122 to function as the following means (1) to (8).
(1) a water treatment process flow display means configured to display a water treatment process flow on a screen
(2) a water treatment process flow diagram creation means configured to create a water treatment process flow diagram simulating a real water treatment process flow by arranging unit icons corresponding to water treatment unit processes on the screen and connecting streams each representing a flow of water to input terminals or output terminals of the respective unit icons
(3) a stream flow rate temporary setting means configured to once determine flow rates of the respective streams on the water treatment process flow diagram so that there is no contradiction in a water balance for each of the unit icons
(4) an any stream flow rate changing and determining means configured to change and determine any one of the flow rates of the streams determined by the stream flow rate temporary setting means to any value
(5) a derived stream flow rate determination means configured to calculate and determine flow rates of all the streams that are calculable necessarily based on the determined flow rates of the streams
(6) a next unit selection means configured to select one unit icon connected to any one or more of the streams whose flow rates are determined and connected to any one or more of the streams whose flow rates are not determined
(7) a next unit flow rate determination means configured to calculate and determine the flow rates of all the streams which are connected to the selected unit icon and whose flow rates are not determined according to a priority order set for each of the unit icons
(8) a repeated calculation and determination means configured to repeatedly use the derived stream flow rate determination means, the next unit selection means, and the next unit flow rate determination means until the flow rates of all the streams are determined.

It is more preferable that the water treatment process calculation program 123 further causes the computer, which performs a process calculation of a water treatment process, to function as: a highest priority stream setting means configured to set the stream desired to have a highest priority as a highest priority stream.

It is more preferable that the water treatment process calculation program 123 further causes the computer, which performs a process calculation of a water treatment process, to function as: a reverse osmosis membrane unit priority means configured to select a reverse osmosis membrane unit icon in a case in which there are a plurality of selectable unit icons and the reverse osmosis membrane unit icon is included among the selectable unit icons when one unit icon connected to any one or more of the streams whose flow rates are determined and connected to any one or more of the streams whose flow rates are not determined is selected.

It is more preferable that the water treatment process calculation program 123 further causes the computer, which performs a process calculation of a water treatment process, to function as: a downstream unit priority means configured to select a unit icon that is located substantially further downstream in a case in which there are a plurality of selectable unit icons when one unit icon connected to any one or more of the streams whose flow rates are determined and connected to any one or more of the streams whose flow rates are not determined is selected.

It is more preferable that the water treatment process calculation program 123 further causes the computer, which performs a process calculation of a water treatment process, to function as: a flow rate reset means configured to reset the flow rates of all the streams to values at a time point when there is no contradiction in a previous water balance in a case in which there is contradiction in the water balance in a calculation process.

Although various embodiments have been described above, the present invention is not limited to these examples. It is apparent to those skilled in the art that various changes or modifications can be conceived within the scope described in the claims, and it should be naturally understood that those belong to the technical scope of the present invention. In addition, the components described in the above embodiments may be combined freely without departing from the gist of the invention.

The present application is based on a Japanese patent application (Japanese Patent Application No. 2023-11784) filed on January 30, 2023, and the contents thereof are incorporated herein by reference.

### REFERENCE SIGNS LIST

1: raw water
2: ultrafiltration membrane
3: reverse osmosis membrane
4: product water
5: raw water pump
6: branch
7: air washing blower
8: supply pump
9: high pressure pump
10: chemical injection device
11: energy recovery device
12: branch
13: junction
21: stream
22: upstream end
23: downstream end
24: unit icons
25: input part
26: output part
27: raw water unit icon
28: final product water unit icon
29: final wastewater unit icon
30: reverse osmosis membrane unit icon
31: reverse osmosis membrane supply water inlet
32: reverse osmosis membrane concentrated water outlet
33: reverse osmosis membrane permeate water outlet
34: pump unit icon
35: pump supply water inlet
36: pump discharge port
37: pressure exchange type energy recovery device unit icon
38: high-pressure side inlet
39: low-pressure side inlet
40: high-pressure side outlet
41: low-pressure side outlet
65: high-pressure side inlet flow rate
66: high-pressure side outlet flow rate
67: low-pressure side inlet flow rate
68: low-pressure side outlet flow rate
71: stream flow rate selected by user
72: pump unit icon
73: pump discharge port flow rate
74: pump supply water inlet flow rate
75: reverse osmosis membrane unit icon
76: reverse osmosis membrane concentrated water outlet flow rate
77: reverse osmosis membrane permeate water outlet flow rate
78: reverse osmosis membrane supply water inlet flow rate
81: reverse osmosis membrane unit icon
82: branch unit icon
83: junction unit icon
84: reverse osmosis membrane permeate water branch unit icon
85: reverse osmosis membrane concentrated water branch unit icon
86: final product water unit icon
89: second-stage reverse osmosis membrane unit icon
91: reverse osmosis membrane supply water inlet flow rate
92: reverse osmosis membrane permeate water outlet flow rate
93: reverse osmosis membrane concentrated water outlet flow rate
94: reverse osmosis membrane recovery rate
101: pump supply water inlet flow rate
102: reverse osmosis membrane supply water inlet flow rate
103: reverse osmosis membrane permeate water outlet flow rate
104: reverse osmosis membrane concentrated water outlet flow rate
111: first-stage reverse osmosis membrane unit icon
112: second-stage reverse osmosis membrane unit icon
113: third-stage reverse osmosis membrane unit icon
121: computer
122: screen
123: water treatment process calculation program
124: recording medium
125: on-premise server
126: cloud server
127: browser

## Claims

1. A process calculation method for a water treatment process that operates on a computer and on a screen of the computer, the method comprising:
1. step 1 of creating a water treatment process flow diagram simulating a real water treatment process flow by arranging unit icons corresponding to water treatment unit processes on the screen and connecting streams each representing a flow of water to input terminals or output terminals of the respective unit icons;
2. step 2 of once setting flow rates of the respective streams on the water treatment process flow diagram so that there is no contradiction in a water balance for each of the unit icons;
3. step 3 of changing and determining any one of the flow rates of the streams set in step 2 to any value;
4. step 4 of calculating and determining flow rates of all the streams that are calculable necessarily based on the determined flow rates of the streams;
5. step 5 of selecting one unit icon connected to any one or more of the streams whose flow rates are determined and connected to any one or more of the streams whose flow rates are not determined, and calculating and determining the flow rates of all the streams which are connected to the selected unit icon and whose flow rates are not determined according to a priority order set for each of the unit icons; and
6. step 6 of repeating the steps 4 to 5 until the flow rates of all the streams are determined.

2. The process calculation method for a water treatment process according to claim 1, further comprising:
a step of setting a stream desired to have a highest priority as a highest priority stream before the step 3; and
a step of determining a flow rate of the highest priority stream before or after the step 3.

3. The process calculation method for a water treatment process according to claim 1 or 2, wherein
in the step 5, when there are a plurality of selectable unit icons and a reverse osmosis membrane unit icon is included among the selectable unit icons, the reverse osmosis membrane unit icon is selected.

4. The process calculation method for a water treatment process according to any one of claims 1 to 3, wherein
in the step 5, when there is a plurality of the selectable unit icons, a unit icon that is located substantially further downstream is selected.

5. The process calculation method for a water treatment process according to any one of claims 1 to 4, wherein
in the step 1, the water treatment process flow diagram to be created includes at least one or more circulation.

6. The process calculation method for a water treatment process according to any one of claims 1 to 5, wherein
in any one of the steps 4 to 6, when there is a contradiction in the water balance, the flow rates of all the streams are returned to the flow rates at the completion of the step 2.

7. A water treatment process calculation program for causing a computer, in order to perform a process calculation of a water treatment process, to function as:
a water treatment process flow display means configured to display a water treatment process flow on a screen;
a water treatment process flow diagram creation means configured to create a water treatment process flow diagram simulating a real water treatment process flow by arranging unit icons corresponding to water treatment unit processes on the screen and connecting streams each representing a flow of water to input terminals or output terminals of the respective unit icons;
a stream flow rate temporary setting means configured to once set flow rates of the respective streams on the water treatment process flow diagram so that there is no contradiction in a water balance for each of the unit icons;
an any stream flow rate changing and determining means configured to change and determine any one of the flow rates of the streams set by the stream flow rate temporary setting means to any value;
a derived stream flow rate determining means configured to calculate and determine flow rates of all the streams that are calculable necessarily based on the determined flow rates of the streams;
a next unit selection means configured to select one unit icon connected to any one or more of the streams whose flow rates are determined and connected to any one or more of the streams whose flow rates are not determined;
a next unit flow rate determining means configured to calculate and determine flow rates of all the streams which are connected to the selected unit icon and whose flow rates are not determined according to a priority order set for each of the unit icons; and
a repeated calculation and determination means configured to repeatedly use the derived stream flow rate determining means, the next unit selection means, and the next unit flow rate determining means until the flow rates of all the streams are determined.

8. The water treatment process calculation program according to claim 7 for causing the computer, in order to perform a process calculation of a water treatment process, to function as:
a highest priority stream setting means configured to set a stream desired to have a highest priority as a highest priority stream.

9. The water treatment process calculation program according to claim 7 or 8 for causing the computer, in order to perform a process calculation of a water treatment process, to function as:
a reverse osmosis membrane unit priority means configured to select a reverse osmosis membrane unit icon in a case in which there are a plurality of selectable unit icons and a reverse osmosis membrane unit icon is included among the selectable unit icons when one unit icon connected to any one or more of the streams whose flow rates are determined and connected to any one or more of the streams whose flow rates are not determined is selected.

10. The water treatment process calculation program according to any one of claims 7 to 9 for causing the computer, in order to perform a process calculation of a water treatment process, to function as:
a downstream unit priority means configured to select a unit icon that is located substantially further downstream in a case in which there are a plurality of selectable unit icons when one unit icon connected to any one or more of the streams whose flow rates are determined and connected to any one or more of the streams whose flow rates are not determined is selected.

11. The water treatment process calculation program according to any one of claims 7 to 10, wherein
the created water treatment process flow diagram includes at least one or more circulation.

12. The water treatment process calculation program according to any one of claims 7 to 11 for causing the computer, in order to perform a process calculation of a water treatment process, to function as:
a flow rate reset means configured to reset the flow rates of all the streams to values at a time point when there is no contradiction in a previous water balance in a case in which there is a contradiction in the water balance in a calculation process.

13. A computer-readable recording medium storing the water treatment calculation program according to any one of claims 7 to 12.

14. A water treatment process calculation system, wherein
the recording medium according to claim 13 is a server, and a water treatment process is calculable by accessing the server via a browser.
